# EUROPEAN PATENT APPLICATION

(11) **EP 3 062 081 A1**
(43) Date of publication of application: **31.08.2016**
(21) Application number: 16075006.3
(22) Date of filing: 19.02.2016
(51) Int. Cl.: G01M 3/36

(54) **LEAK TEST APPARATUS FOR FLEXIBLE PACKAGING**

(30) Priority: 26.02.2015 NL 1041204
(71) Applicant: den Dunnen, Jan, 5109 RE 's-Gravenmoer (NL)
(72) Inventor: den Dunnen, Jan, 5109 RE 's-Gravenmoer (NL)

(57) **Abstract**

The invention concerns a leak test apparatus (10, 11) for flexible air-tight packaging (3) with or without a closing-off element (not shown). The leak test apparatus comprises a bending stiff plate (4) on the chamber (6), open on one side, filled with a flexible air-tight packaging (3). On mentioned bending stiff plate (4) a pressure force (9) is exerted by means of a spindle structure (1) or an electromechanical system with stepping motor. Mentioned chamber (6) is placed on a load cell with resistance strain gauges (7, 15) connected to a transmitter (5) to represent the reduction in pressure force (9) if the flexible air-tight packaging (3) is leaking.

## Description

The invention concerns an apparatus to determine leakage in a flexible air-tight packaging with or without a closing-off element by measuring the level of gases, liquids or solid materials, which are often in a granular form or state, in the flexible air-tight packaging.

A leak test assembly and method are known from the European Patent EP 2801808, titled: "Leak Test Assembly and Test Method", from applicant Lüdolph Management GmbH, Ruschkampweg 17, 27607 Langen, Germany, by inventors Gerald Lüdolph and Wolfgang Fuhrmann.

The invention concerns a set-up for testing, for instance, air-tight packaging with or without closing-off cap. The sealed package is placed in a test chamber. Test gas is blown under pressure into the package and in case of leakage, test gas flows through the package wall or cap into the environment of the air-tight chamber. It is also possible to create underpressure in the test chamber and/or overpressure within the packaging. The danger is that the flexible packaging might tear. From the test chamber a pipe leads to a completely fitted out test facility with test gas measuring equipment. The test gas (e.g. nitrogen gas) leaked is subsequently detected by a selective sensor.

In conclusion the leak test assembly described above is rather complicated and therefore costly and time-consuming in use. Furthermore, due to the test gas pressed into the packaging, during production mostly harmless test gas, such as nitrogen gas, can the leak test assembly hardly be used for flexible packages as the flexible package is prone to tearing when pressure differences in the test chamber are too high as a result of which the content of the packages is lost. So the tested product is then lost for further sale on the market. This test method is a sample test method and may therefore cause loss of a great number of products in flexible air-tight packaging. Testing is time-consuming and therefore costly in labour and equipment.

The leakage of products in the air-tight packaging must be statistically within a certain interval. This method requires a larger number of products to be tested. This also is a disadvantage due to the loss of many flexible air-tight products.

The aim of the present intervention is to manufacture a modified and improved apparatus for testing flexible air-tight packaging which does not have the disadvantages mentioned above and which can be put on the market in an economical and efficient way.

For this purpose a leak test apparatus for air-tight packaging, corresponding to the invention, has been further developed, characterised in that mentioned flexible packages can be placed in a matching form or chamber, open or partially open at one side, which form or chamber is mostly spatially bending stiff, provided with a globally bending stiff closing-off plate whereon a pressure force can be exerted while the whole set-up is placed on an electronic system according to a programmable diagram for measuring the decreasing pressure force over a period of time.

The advantage is a leak test apparatus to determine in a fast and non-destructive way leakage of the flexible air-tight packages.

Furthermore, the leak test apparatus according to the invention has been further developed characterised in that the pressure can be applied with an electromechanical system (not mentioned) by means of a stepping motor or electric motor.

The advantage is that a precise pressure can be applied on the flexible package, as this pressure is higher than the pressure achieved in a vacuum chamber (>1 atmosphere).

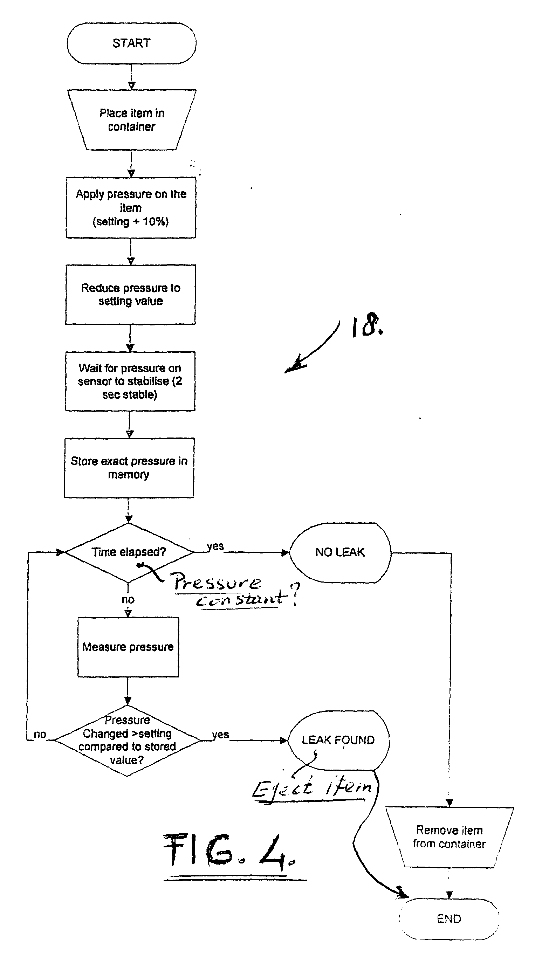

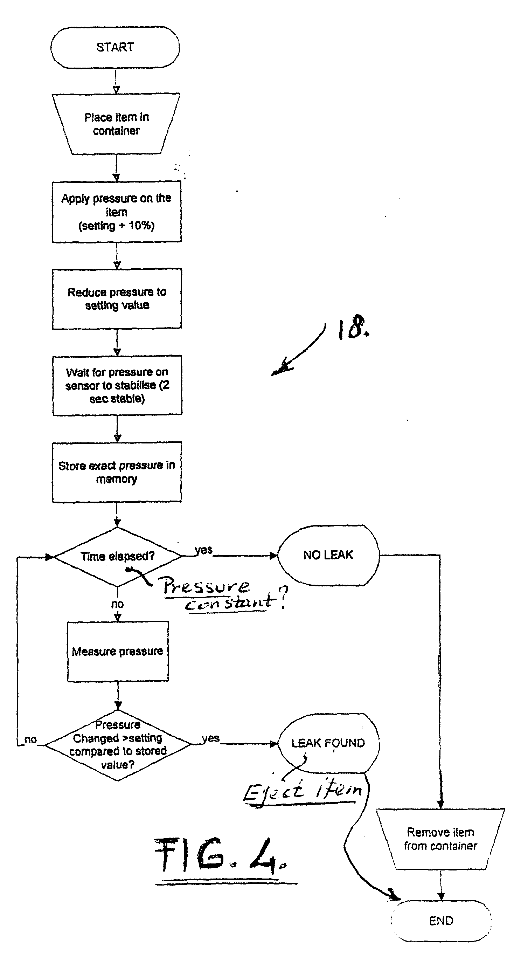

Then, the leak test apparatus in accordance with the present invention, has been developed in a further way, characterised in that mentioned chamber, which is placed on an electronic system with a programmable diagram in figure 4, consists of structure with resistance strain gauges (load cells), coupled to a transmitter to determine the change in pressure exerted over time, where the physical variables measured (change in pressure force over time) can be sent to a personal computer for presentation.

The advantage is a very precise determination of a possible decrease in pressure force. This is an indication of the leakage of the flexible air-tight packaging.

Furthermore, the leak test apparatus according to the present invention has been developed in such a way, characterized in that mentioned electronic system (not mentioned) is globally executed in accordance with the programmable diagram of figure 4.

The advantage is a clear and quick representation of the measured values.

The invention is described further hereinafter, according to a preferred embodiment, by way of example only, with reference to the accompanying drawing, in which:
Figure 1 illustrates an oblique projected side elevation of the leak test apparatus in accordance with the invention, in which the chamber is placed on a plate-shaped load cell;
Figure 2 shows a cross section over line II of figure 1;
Figure 3 shows a longitudinal section of another embodiment, but now the bending stiff chamber has been placed on a specific commercially available protruding beam system; and
Figure 4 shows the programmable diagram of the electronic measuring system.

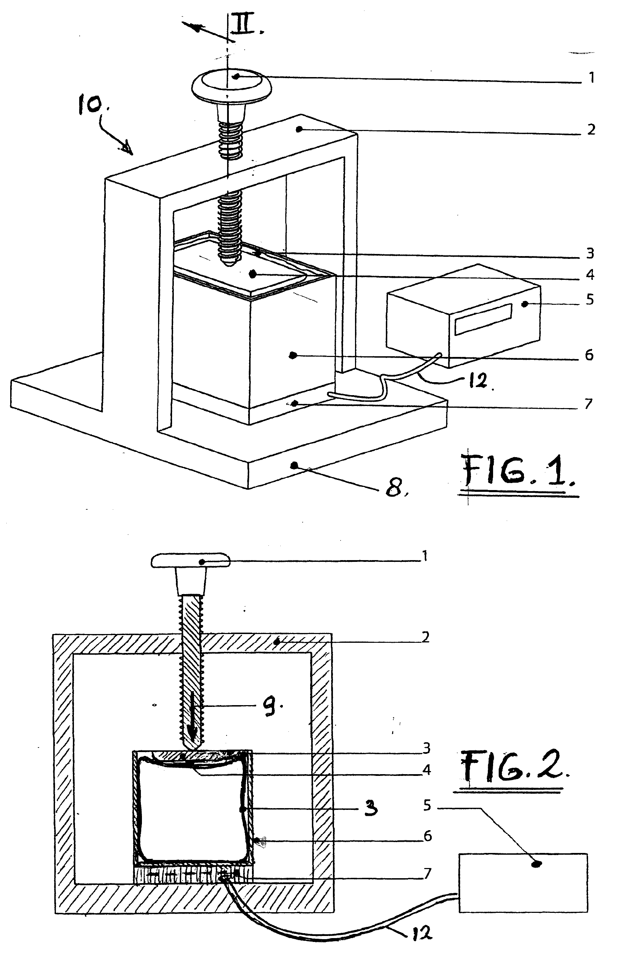

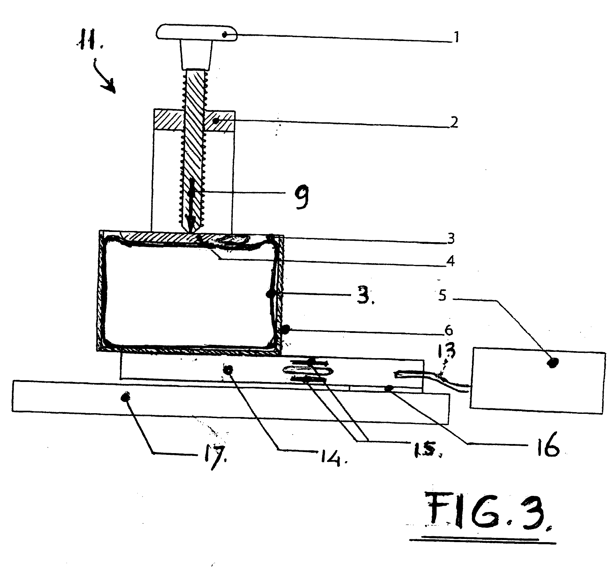

Figure 1 represents an oblique projected side elevation of the leak test apparatus 10 in accordance with a preferred embodiment. This preferred embodiment had been developed for flexible air-tight packages 3 of <50 litres, a measuring time of 10 seconds and a weight of < 100 kilos. Pressure force can also be exerted electromechanically. The accuracy of the change in pressure force over a time period is in the order of 5 to 6 digits. The leak test apparatus for flexible air-tight packaging comprises a bending stiff bottom plate 8 with a bending stiff clamp 2 for passing through the spindle structure 1. The spindle structure 1 exerts a pressure force 9 on the globally closing-off bending stiff plate 4, which presses the package 3 in the bending stiff chamber 6 which is spatially open on one side, against its walls (see figures 2 and 3). The bending stiff chamber 6 which is open on one side is placed on a plate-shaped load cell with resistance gauges 7. The electrical signals of the exerted pressure force are sent to a transmitter 5 by means of cable 12 to represent the decrease of the pressure force mentioned 9 should the flexible air-tight packaging 3 show any leakage. The inner side of the bending stiff chamber 6, open on one side, and the inner side of the globally closing-off plate 4 may have a slightly roughened surface to ease the outflow of the leaking gas from the flexible air-tight package 3. In this way the content of the flexible packages, which may contain food, is not chemically affected and approved packages can still be put on the market. The spindle structure 1 can also be replaced by an electromagnetic system with stepping motor or electromotor (not mentioned) to exert the pressure force 9, which has to be determined for the packages on the globally closing off bending stiff plate 4.

Figure 3 shows the bending stiff chamber 6, open or partially open on one side, which has been placed on a specific protruding beam system 14 with resistance strain gauges 15 at the bottom and at the top. This system is commercially available and is much used. The specific protruding beam system 14 is mounted on a bending stiff moment resisting structure 16 to the bending stiff bottom plate 17. Measuring results are sent to transmitter 5 by means of cable 13.

## Claims

1. Apparatus to determine leakage of flexible air-tight packages with or without closing-off element, by means of measuring with the aid of possible changes in pressure force over a period of time, in which the flexible packages are usually filled with gases, liquids or solid substances, mostly in granular form, **characterised in that** mentioned flexible air-tight packages (3) can be placed in a matching bending stiff chamber (6) open or partially open on one side provided with a globally closing-off bending stiff plate (4), on which pressure force (9) can be exerted, where the whole is placed on an electronic system with a programmable diagram (18) for measuring the decrease of pressure force (9) over a period of time.

2. Apparatus as claimed in claim 1, wherein mentioned pressure force (9) can be exerted manually by means of, for instance, a spindle structure (1) with a revolving knob (1).

3. Apparatus as claimed in claim 1, wherein mentioned pressure force (9) can be exerted by an electromechanical system (not shown) with a stepping motor or electric motor.

4. Apparatus as claimed in claims 1-3, wherein mentioned chamber (6) placed on mentioned programmable electronic system according to a programmable diagram (18) consists of a structure with resistance strain gauges (7, 15) coupled to a transmitter (5) to determine the changes in pressure force (9) over a period of time, where for presentation the resulting physical variables can be sent to a personal computer.

5. Apparatus as claimed in claim 1 and 4, wherein the structure with resistance strain gauges consists of a specific protruding beam system (14) with resistance strain gauges (15) at the top and bottom.

6. Apparatus as claimed in claim 1 and 4, wherein mentioned chamber (6) is placed on a plate-shaped load cell with resistance strain gauges (7), which can be connected by means of a transmitter (5) to a personal computer for output of measuring data.

7. Apparatus as claimed in claims 4-6, wherein mentioned structure with resistance strain gauges (7, 15) are load cells that are commercially available.

8. Apparatus as claimed in claims 1-7, wherein mentioned electronic measuring system (not shown) globally takes place according to the programmable diagram (18) in figure 4.

9. Apparatus as claimed in claims 1-8, wherein mentioned globally closing off bending stiff plate (4) is provided with an opening (3) to give access to a flexible air-tight packaging closing off element.

10. Apparatus as claimed in claims 1-9, wherein the inner side of the bending stiff chamber (6) is open on one side and that the inner side of the globally closing off bending stiff plate (4) has a slightly roughened surface to ease the passage of leaking gas form the flexible air-tight packaging (3).
